# DEMANDE DE BREVET EUROPEEN

(11) **EP 1 624 404 A1**
(43) Date de publication de la demande: **08.02.2006**
(21) Numéro de dépôt: 04291997.7
(22) Date de dépôt: 05.08.2004
(51) Int. Cl.: G06Q 10/00

(54) **Procédé d'aide à la conception et à l'aménagement d'un espace**

(71) Demandeur: Lebraut, Ronan, 78110 Le Vesinet (FR)
(72) Inventeur: Lebraut, Ronan, 78110 Le Vesinet (FR)
(74) Mandataire: de Saint-Palais, Arnaud Marie

(57) **Abrégé**

Le procédé selon l'invention concerne une aide à l'aménagement d'un espace, ce procédé mettant en oeuvre une unité de gestion et d'assistance (U) en relation avec une multiplicité de fournisseurs et auquel un utilisateur/client (Blocs Cl1-Cln) doté d'une unité locale (Blocs UL1-ULn) et comprenant les étapes suivantes : une modélisation 2D ou 3D par l'unité (U) des éléments d'aménagement (Blocs BD1-BDn) des fournisseurs (Blocs F1-Fn) selon un standard prédéterminé, une intégration par ladite unité (U) des éléments modélisés dans une base de données (Bloc 1) accessible par les utilisateurs, une mise à disposition de l'utilisateur/client par l'unité (U) d'un outil de modélisation 2D ou 3D, une modélisation par l'utilisateur/client sur son unité locale (Blocs UL1-ULn) d'un espace à l'aide dudit outil, selon les standards de l'outil, une sélection par cet utilisateur/client sur son unité locale d'éléments modélisés dans ladite base de données, un positionnement par l'utilisateur/client sur son unité locale des éléments sélectionnés dans ledit espace, une visualisation en 2D ou 3D de l'espace dans lequel sont positionnés les éléments.

Elle s'applique notamment au domaine de l'architecture et de la décoration intérieure.

## Description

La présente invention concerne un procédé d'aide à la conception et à l'aménagement d'un espace. Elle s'applique plus particulièrement, mais non exclusivement, au domaine de l'architecture et de la décoration intérieure.

De façon générale, l'aménagement d'un espace tel que, par exemple, une pièce d'habitation ou un stand d'exposition est subordonné à plusieurs conditions d'ordre esthétique mais aussi d'ordre technique. Par ailleurs, il dépend des éléments d'aménagement disponibles dans le commerce et qui sont proposés par de multiples fournisseurs. Bien entendu, dans tous les cas, ces éléments doivent s'intégrer facilement à l'emplacement prévu.
Or, il est fastidieux de devoir prendre toutes les mesures nécessaires étant entendu que, si les dimensions du meuble ne conviennent pas, une des alternatives offerte est d'envisager un autre emplacement ce qui signifie encore d'autres prises de mesure.

Une solution consisterait à proposer une simulation d'intégration d'éléments dans l'espace auquel ils sont destinés.
Cependant de nombreuses difficultés doivent être surmontées :
- les fournisseurs différents sont nombreux et les éléments de leurs catalogues sont présentés selon des standards différents de sorte qu'il est impossible de les intégrer dans un même espace défini par l'utilisateur,
- l'espace lui-même doit être modélisé selon un standard permettant cette intégration.

L'invention a donc plus particulièrement pour but un procédé qui permette à un particulier d'effectuer une telle intégration dans un espace qu'il a lui-même défini.

A cet effet, elle propose de parvenir à ce résultat grâce à un procédé mettant en oeuvre une unité de gestion et d'assistance en relation avec une multiplicité de fournisseurs et auquel un utilisateur/client doté d'une unité locale peut s'adresser par exemple au moyen d'un réseau de communication tel que le réseau Internet.

Selon l'invention, ce procédé comprend les étapes suivantes :
- une modélisation 2D ou 3D par l'unité de gestion et d'assistance des éléments d'aménagement des différents fournisseurs selon un standard prédéterminé,
- une intégration par ladite unité de gestion des éléments modélisés dans une base de données accessible par les utilisateurs/clients,
- une mise à disposition de l'utilisateur/client par l'unité de gestion d'un outil de modélisation 2D ou 3D par exemple par l'intermédiaire du réseau de communication,
- une modélisation par l'utilisateur/client sur son unité locale d'un espace à l'aide dudit outil, selon les standards de l'outil,
- une sélection par cet utilisateur/client sur son unité locale d'éléments modélisés dans ladite base de données,
- un positionnement par l'utilisateur/client sur son unité locale des éléments sélectionnés dans ledit espace,
- une visualisation en 2D ou 3D de l'espace dans lequel sont positionnés les éléments.

Ainsi, la base de données pourra également comprendre des photos des éléments modélisés ainsi que différentes informations telles que dimensions, prix, références afin d'avoir un rendu à la fois pratique et esthétique.

La base de données d'éléments modélisés pourra être interrogée selon de nombreux critères tels que dimensions, matériaux, style, fonction grâce à un moteur de recherche mis à la disposition de l'utilisateur/client par l'unité de gestion.

La modélisation de l'espace pourra tenir compte de nombreux critères tels que dimensions, réservations correspondant aux points d'eau, aux radiateurs, contraintes (éloignement, proximité, liaison...).

Le standard prédéterminé pour la modélisation des éléments et des espaces permet de les mettre à la même échelle pour avoir une intégration qui soit réaliste voire même normalisée.

La visualisation pourra se faire en 2D sous la forme d'une implantation 2D (vue schématique du dessus) ou en 3D avec la possibilité de se « déplacer » dans l'espace.

Le positionnement du ou des éléments sélectionnés dans l'espace modélisé pourra être réalisé au moyen d'une interface graphique par laquelle il suffira à l'utilisateur/client de faire glisser l'élément sur l'emplacement choisi dans l'espace pour que ce dernier s'intègre en respectant les échelles de dimensions.

Selon une variante, le positionnement des éléments choisis pourra se faire automatiquement dans l'espace modélisé après que l'utilisateur/client ait indiqué par exemple la fonction de l'espace telle qu'une salle de bain. Dans ce cas, plusieurs configurations pourront être proposées, toutes correspondant aux contraintes données pour la modélisation dudit espace (version avec une baignoire ou une douche...).

Eventuellement, la mise en oeuvre de ce procédé pourra donner lieu à une utilisation via un réseau tel qu'un intranet ou internet ou sur une borne interactive disposée dans un magasin.

On pourra également envisager qu'un fournisseur procure à son client les moyens de mettre en oeuvre le procédé et le contenu de son catalogue par exemple au moyen d'un CD ROM.
Il pourra aussi lui fournir au moyen d'un accès privilégié sur un serveur la possibilité d'utiliser le procédé ; dans ce cas, il peut ne fournir que le contenu de son catalogue en prévoyant ou non la possibilité de charger ou télécharger d'autres contenus de catalogues.

Par ailleurs, il pourra comprendre, dans le cas d'une utilisation en réseau, une comptabilisation des accès à la base de données afin d'établir des statistiques ou encore de facturer aux fournisseurs par exemple au prorata de la consultation de leurs produits.

Un module de commande en ligne pourra également être prévu.

Des modes d'exécution seront décrits ci-après, à titre d'exemples non limitatifs avec référence aux dessins annexés dans lesquels :
La figure 1 est une représentation d'un organigramme simplifié d'un procédé selon l'invention ;
La figure 2 est une représentation d'un organigramme de la mise en oeuvre du procédé selon l'invention illustré sur la figure 1 ;
La figure 3 est une représentation d'une interface graphique pour le positionnement des éléments modélisés choisis dans l'espace ;
La figure 4 est une représentation d'une modélisation d'un espace effectuée par un client ;
La figure 5 est une représentation d'une configuration d'éléments intégrés dans l'espace modélisé de la figure 2 ;
La figure 6 est une représentation d'une deuxième configuration d'éléments intégrés dans l'espace modélisé de la figure 2.

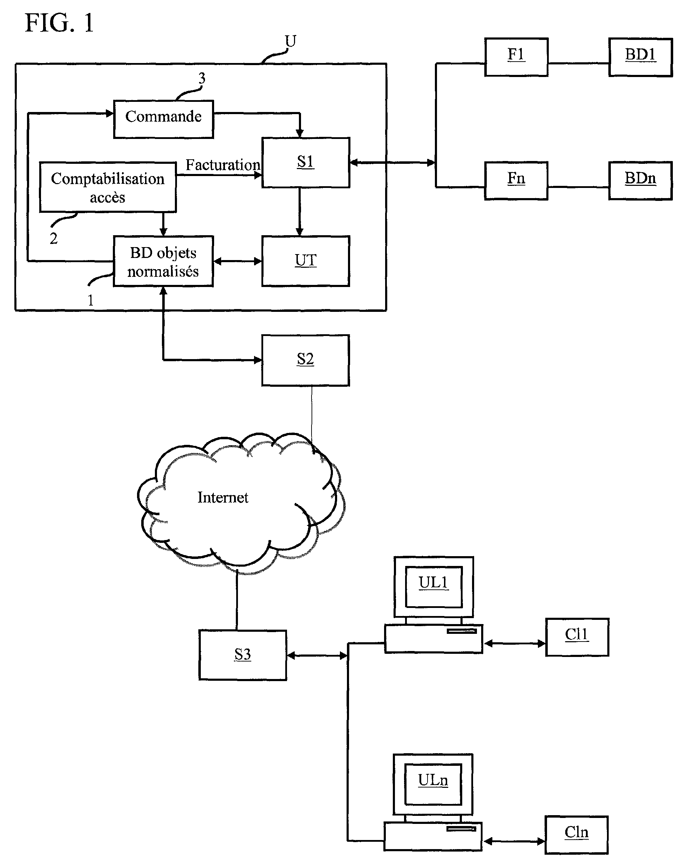

Dans l'exemple de la figure 1, l'organigramme simplifié d'un procédé selon l'invention comprend les étapes suivantes regroupées dans un bloc assurant notamment le rôle d'unité de gestion et d'assistance :
- centralisation des données d'une ou plusieurs bases de données fournisseurs (blocs BD1-BDn), dans un serveur fournisseur (bloc S1),
- modélisation 2D ou 3D selon un standard prédéterminé des éléments des fournisseurs au moyen d'une unité de traitement (bloc UT),
- intégration des éléments modélisés dans une base de données (bloc 1) accessible par les utilisateurs/clients.

Les données sont alors transmises au moyen d'un serveur (Bloc S2) connecté à Internet et elles aboutissent sur un poste client qui peut par exemple être un serveur (bloc S3) qui transmet à plusieurs unités locales (blocs UL1-ULn) utilisées par les clients (blocs CI1-CIn) ou directement une unité locale d'un client,

Il faut noter qu'une comptabilisation des accès (Bloc 2) peut être envisagée de façon à permettre une facturation des fournisseurs au prorata de la consultation de leurs éléments.

Un module de commande en ligne (Bloc 3) relié d'une part, à la base de données et, d'autre part, aux fournisseurs par exemple via le serveur S2, peut être mis en place.

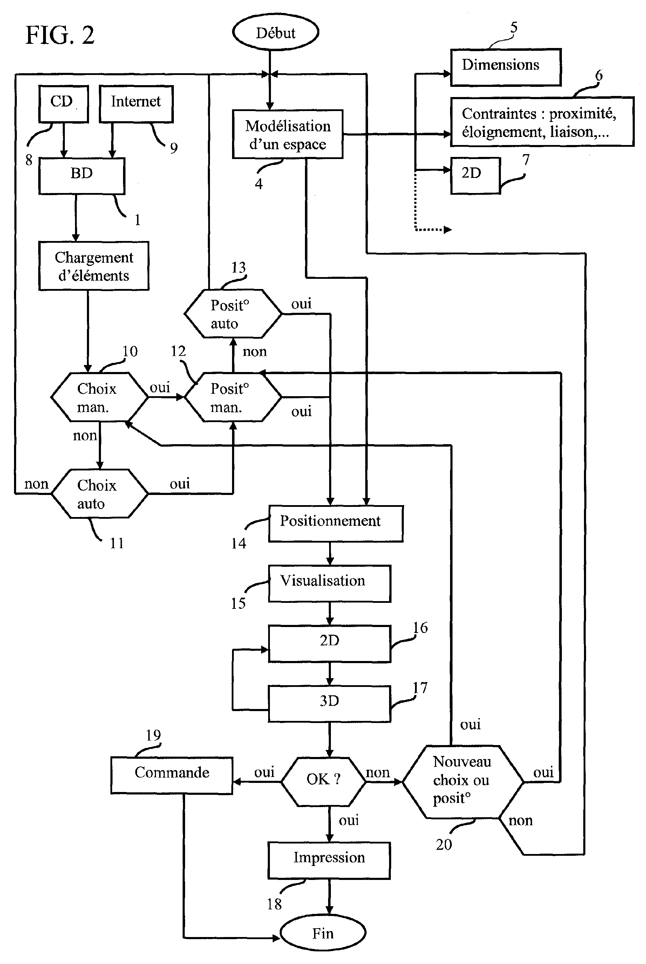

Les étapes du procédé mis en oeuvre sont alors les suivantes (figure 2) :
- D'une part, la modélisation d'un espace selon un standard (Bloc 4) par un client, cette modélisation nécessitant l'acquisition d'informations de nature différente telles que des dimensions (Bloc 5), des contraintes (Bloc 6) (proximité, éloignement, liaison...), utilisation de deux dimensions (Bloc 7),
- D'autre part,
   ○ l'utilisation de la base de données d'éléments modélisés (Bloc 1) accessible par exemple par Internet (Bloc 8) ou par un CD ROM (Bloc 9),
   ○ un choix manuel (Bloc 10) ou automatique (Bloc 11) d'éléments modélisés,
   ○ un positionnement manuel (Bloc 12) ou automatique (Bloc 13) des éléments modélisés,
   ○ le positionnement (Bloc 14) des éléments sélectionnés est visualisé (Bloc 15),
   ○ cette visualisation peut se faire en 2D (Bloc 16) ou 3D (Bloc 17),
   ○ si le client est satisfait, il peut imprimer le résultat (Bloc 18) ou encore passer directement commande (Bloc 19) auprès du ou des fournisseurs concernés,
   ○ si le client n'est pas satisfait de la configuration, il peut effectuer un nouveau choix d'éléments ou de position (Bloc 20).

Si le client utilise le choix automatique d'éléments, ce choix sera basé sur l'indication de la fonction de l'espace modélisé et éventuellement sur certaines orientations telles que couleurs, matériau...

Si le client utilise le positionnement automatique, ledit positionnement sera fait en tenant compte des informations utilisées (Blocs 5 à 6) pour la modélisation de l'espace.

Chaque fournisseur F modélise ou fait modéliser le contenu de son catalogue. Chaque élément d'aménagement est ainsi « scanné » en 2D ou 3D, ses dimensions sont enregistrées, une ou plusieurs photos sont prises et toutes ces données sont paramétrées selon le standard prédéterminé et entrées dans la base de données de même que leurs noms, le nom de la collection dont ils font partie, leurs fonctions, leurs références fournisseurs, chaque type de données donne lieu à une catégorie.

Le standard de modélisation fixe notamment une échelle selon laquelle toutes les modélisations sont effectuées.

La fourniture d'informations pour la modélisation de l'espace peut se faire en renseignant différents champs sur des informations telles que des dimensions, des emplacements des ouvertures, des obstacles (radiateurs, renfoncement...), des réservations fonctionnelles (arrivée d'eau...), la fonction de la pièce (cuisine, salle de bains...), les couleurs des murs, des sols ou encore en utilisant une application de dessin simplifiée avec éventuellement une palette graphique.

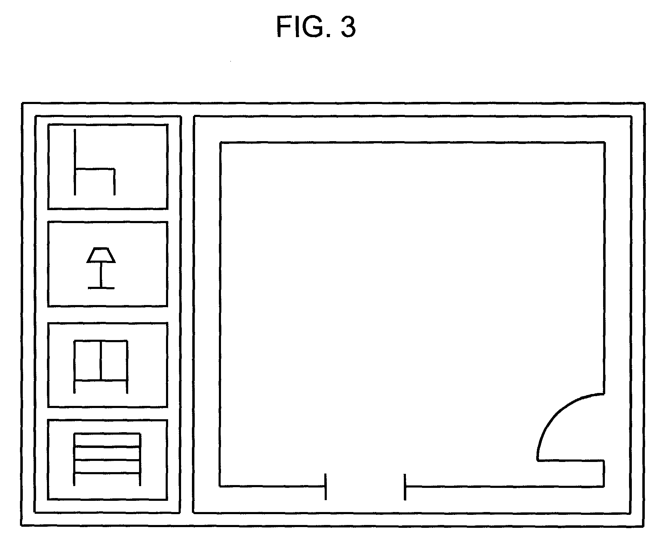

Le positionnement est également réalisé au moyen d'une interface graphique IG (figure 3) : sur une partie de l'écran E1 sont représentés les éléments sélectionnés et sur une autre partie E2 l'espace modélisé, il suffit alors au client de déplacer le ou les éléments choisis vers une zone de l'espace modélisé pour que ce ou ces derniers s'intègrent si les différentes contraintes correspondent à celles de la zone indiquée.

Le client obtient ainsi une visualisation de son espace modélisé en 2D et/ou 3D selon le standard prédéterminé.

La représentation 2D peut correspondre à une vue du dessus de l'espace, elle répond en particulier au besoin de s'assurer que les dimensions des éléments correspondent à celles de l'espace.

La représentation 3D, en particulier quand elle rend les effets de matériaux et de couleur, permet d'avoir une simulation très réaliste du résultat de l'intégration d'éléments dans un espace donné.

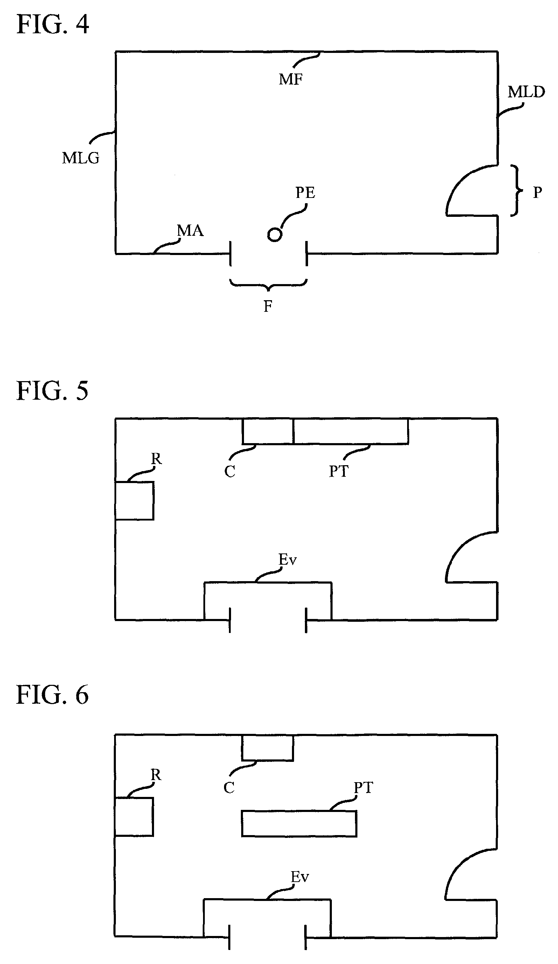

Plus précisément, dans le cas d'une cuisine, le client a modélisé un espace rectangulaire comportant un mur du fond MF, un mur latéral gauche MLG, une porte P située au milieu du mur latéral droit MLD, une fenêtre F au milieu du mur avant MA avec un point d'eau PE au-dessous (Figure 4). Il pourra y avoir des éléments d'une collection X, d'une collection Y et d'une collection Z, ces éléments consistant par exemple en un évier Ev, une cuisinière C, un réfrigérateur R, un plan de travail PT.
Pour chaque collection, plusieurs configurations avec des agencements différents de meubles seront proposées au client.
Par exemple, sur la figure 5, une configuration pourra situer le plan de travail PT et la cuisinière C sur le mur du fond MF, l'évier E sous la fenêtre F et le réfrigérateur R sur le mur latéral gauche MLG.

Dans une autre configuration illustrée sur la figure 6, le plan de travail PT est au centre de la pièce.

## Revendications

1. Procédé d'aide à l'aménagement d'un espace, ce procédé mettant en oeuvre une unité de gestion et d'assistance (U) en relation avec une multiplicité de fournisseurs et auquel un utilisateur/client (Blocs CI1-CIn) doté d'une unité (Blocs UL1-ULn) locale peut s'adresser,
**caractérisé en ce qu'**il comprend les étapes suivantes :
- une modélisation 2D ou 3D par l'unité de gestion et d'assistance (U) des éléments d'aménagement (Blocs BD1-BDn) des différents fournisseurs (Blocs F1-Fn) selon un standard prédéterminé,
- une intégration par ladite unité de gestion (U) des éléments modélisés dans une base de données (Bloc 1) accessible par les utilisateurs,
- une mise à disposition de l'utilisateur/client par l'unité de gestion (U) d'un outil de modélisation 2D ou 3D,
- une modélisation (Bloc 4) par l'utilisateur/client sur son unité locale (Blocs UL1-ULn) d'un espace à l'aide dudit outil, selon les standards de l'outil,
- une sélection par cet utilisateur/client sur son unité locale d'éléments modélisés dans ladite base de données (Blocs 10, 11),
- un positionnement par l'utilisateur/client sur son unité locale des éléments sélectionnés dans ledit espace (Blocs 12-13),
- une visualisation en 2D ou 3D de l'espace dans lequel sont positionnés les éléments (Blocs 15-17).

2. Procédé selon la revendication 1,
**caractérisé en ce que** la mise à disposition de l'utilisateur/client par l'unité de gestion d'un outil de modélisation 2D ou 3D se fait par l'intermédiaire d'un réseau de communication (Bloc 8).

3. Procédé selon la revendication 1,
**caractérisé en ce que** ladite base de données (Bloc 1) comprend des photos des éléments modélisés ainsi que différentes informations telles que dimensions, prix, références.

4. Procédé selon la revendication 1,
**caractérisé en ce que** la base de données d'éléments modélisés (Bloc 1) est interrogée selon de nombreux critères tels que dimensions, matériaux, style, fonction grâce à un moteur de recherche mis à la disposition de l'utilisateur/client par l'unité de gestion.

5. Procédé selon la revendication 1,
**caractérisé en ce que** la modélisation de l'espace (Bloc 4) tient compte de nombreux critères tels que dimensions (Bloc 5), contraintes (Bloc 6), réservations correspondant aux points d'eau, aux radiateurs.

6. Procédé selon la revendication 1,
**caractérisé en ce que** la visualisation (Bloc 15) pourra se faire en 2D (Bloc 16) sous la forme d'une implantation 2D ou en 3D (Bloc 17) avec la possibilité de se « déplacer » dans l'espace.

7. Procédé selon la revendication 1,
**caractérisé en ce que** le positionnement (Blocs 12-14) du ou des éléments sélectionnés dans l'espace modélisé est réalisé au moyen d'une interface graphique (IG) par laquelle l'utilisateur/client fait glisser l'élément (E1) sur l'emplacement choisi dans l'espace (E2) pour que ce dernier s'intègre en respectant les échelles de dimensions.

8. Procédé selon la revendication 1,
**caractérisé en ce que** ladite sélection des éléments modélisés est automatique (Bloc 11).

9. Procédé selon la revendication 1,
**caractérisé en ce que** le positionnement des éléments sélectionnés se fait automatiquement (Bloc 13) dans l'espace modélisé après que l'utilisateur/client ait indiqué par exemple la fonction de l'espace.

10. Procédé selon la revendication 1,
**caractérisé en ce qu'**il est utilisé sur une borne interactive disposée dans un magasin.

11. Procédé selon la revendication 1,
**caractérisé en ce que** les moyens de mettre en oeuvre le procédé et le contenu de son catalogue sont stockés sur un CD ROM (Bloc 9).

12. Procédé selon la revendication 1,
**caractérisé en ce qu'**il comprend, lors d'une utilisation en réseau, une comptabilisation des accès à la base de données afin d'établir des statistiques ou de facturer aux fournisseurs (Bloc 2).

13. Procédé selon la revendication 1,
**caractérisé en ce qu'**il comprend un module de commande en ligne (Bloc 3).
